# FASCICULE DE BREVET EUROPEEN

(11) **EP 0 822 748 B1**
(45) Date de publication et mention de la délivrance du brevet: **15.09.1999**
(21) Numéro de dépôt: 96913597.9
(22) Date de dépôt: 17.04.1996
(51) Int. Cl.: A21B 7/00, A21C 9/04, G07F 9/10

(54) **PROCEDE ET MACHINE DE FABRICATION MECANISEE DE METS**
VERFAHREN UND VORRICHTUNG ZUR AUTOMATISCHEN HERSTELLUNG VON SPEISEN
MECHANIZED FOOD-MANUFACTURING PROCESS AND APPARATUS THEREFOR

(30) Priorité: 21.04.1995 FR 9505041
(43) Date de publication de la demande: 11.02.1998
(73) Titulaire: Societe Civile B.A.R.H., 81000 Albi (FR)
(72) Inventeur: ACKNIN, Christian, F-81150 Terssac (FR); RAYMOND, Philippe, F-81000 Albi (FR)
(74) Mandataire: Ravina, Bernard
(86) Numéro de dépôt international: FR9600579
(87) Numéro de publication internationale: WO9632844

(56) Documents cités:
- EP-A- 0 113 327
- EP-A- 0 224 416
- WO-A-86/03931
- WO-A-92/15183
- FR-A- 2 389 947
- FR-A- 2 597 319
- US-A- 5 309 825
- US-A- 5 365 835

## Description

La présente invention a pour objet un procédé de fabrication mécanisée de mets salés ou sucrés à base de pâte et d'ingrédients contenus dans des dosettes spécifiques et la machine à cet effet.

De tels mets peuvent être des pizzas ou des tartes.

La demande de brevet FR 95.04498 du 12.04.95 déposée par les mêmes demandeurs décrit un procédé de fabrication de tels mets à partir d'ingrédients contenus dans des dosettes spécifiques conçues pour recevoir les produits secs et humides à mélanger et les ingrédients tels que sauces ou garnitures, par exemple, sauce tomate, anchois, fromage, etc...

Le brevet WO A 9215183 (SYNINTEL) décrit une machine pour cuire une pâte molle et destinée à le rester après cuisson en constituant une crêpe.

Elle utilise deux moyens de cuisson sous forme de tambour dont un cuit une face et l'autre, l'autre face de la crêpe.

Il n'est pas prévu dans cette machine de mise en place sur la pâte d'une garniture quelconque.

Dans ce brevet, le nécessaire transfert de la pâte cuite sur une face d'un tambour de cuisson à l'autre rend le résultat aléatoire.

Le brevet WO86/03931 décrit une machine pour faire le pain. Cette machine comprend une enceinte chauffée qui fait fonction à la fois de chambre de mélange des produits, de chambre de fermentation de la pâte et de four fermé de cuisson.

La présente demande concerne plus précisément le procédé de fabrication à partir des dites dosettes et au moyen d'une machine adaptée elle-même étant partie intégrante de l'invention ; le procédé selon l'invention permettant d'obtenir un résultat optimal au point de vue organoleptique, diététique et hygiènique.

A cet effet, le procédé de fabrication de mets salés ou sucrés à base de pâte et d'ingrédients contenus dans des dosettes spécifiques se caractérise essentiellement par les caracteristiques indiquées dans la revendication 1.

Selon l'invention, la machine à fabriquer des mets sucrés ou salés mettant en oeuvre le procédé comprend essentiellement :
- une zone de stockage des dosettes à pâte et des dosettes à ingrédients ;
- des moyens de prélèvement, de préparation et de manipulation des dosettes à pâte permettant leur transfert vers des moyens de cuisson avec préparation préalable de la pâte puis déversement sur les moyens de cuisson ;
- des moyens de prélèvement des dosettes à ingrédients avec moyen d'ouverture et moyen de déversement de celles-ci sur la pâte.

D'autres avantages et caractéristiques de l'invention apparaîtront à la lecture de la description ciaprès de formes de réalisation de l'invention données à titre d'exemple non limitatifs et illustrées par les dessins joints dans lesquels :
- la figure 1 représente une dosette à pâte,
- la figure 2 représente une dosette à ingrédients,
- les figures 3, 4, 5 représentent différents cas de figure de dépose des ingrédients,
- les figures 6 et 7 représentent des vues schématiques de face et de profil de la machine représentée en élévation,
- les figures 8 à 13 représentent des vues en plan de la machine à différents étages de la machine correspondant aux repères A à E des figures 6-7,
- les figures 14, 15, 16 représentent trois types d'outil permettant d'intervenir sur les opérations sur la pâte,
- la figure 17 illustre les opérations de malaxage, de désoperculation, de lamination et d'extraction, lamination avec évacuation des produits.

Dans le procédé selon l'invention, il est fait usage de dosettes spécifiques telles notamment que celles énoncées dans une précédente demande de brevet des mêmes demandeurs.

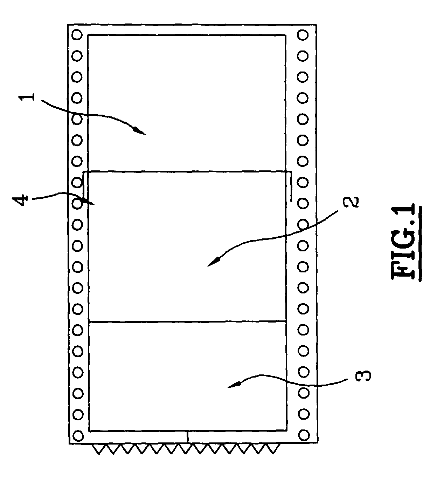

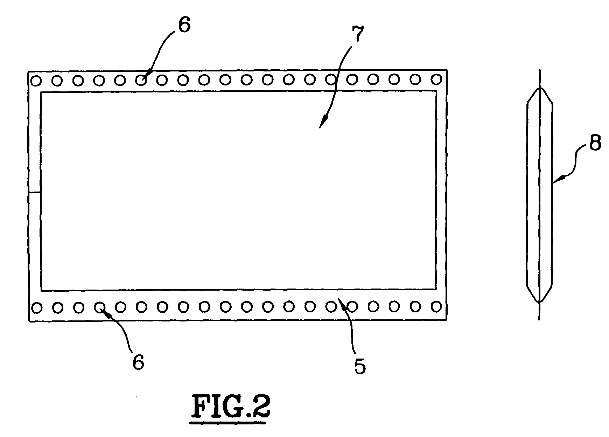

Il est fait usage d'emballages ou de dosettes à pâte tels que représentés en figure 1 ou de dosettes à ingrédients telles que représentées en figure 2.

La dosette à pâte comprend au moins deux enceintes 1 et 2 contenant les produits secs et/ou pulvérulents tels la farine et les produits humides et peut comporter une enceinte 3 contenant un autre ingrédient qui peut par exemple être une sauce.

Les enceintes 1 et 2 sont séparées par un moyen de séparation hermétique 4 qui peut être constitué par une pince articulée ou encliquetée.

La dosette présente un cadre 5 avec des rangées de perforations 6 parallèles pour permettre la manipulation par roue ou courroie crantée.

La séparation en 4 est hermétique et réversible en sorte que par exemple, par enlévement de la pince 4, les enceintes 1 et 2 soient mises en communication, ce qui permet de réaliser la pâte.

En figure 2 est représentée une dosette à ingrédients qui peut comporter une seule enceinte 7 constituée de deux feuilles soudées 8 avec cadre 5.

La dosette à ingrédients peut être du type à deux compartiments et intercalaire telle que décrite dans la précédente demande des mêmes demandeurs.

Le procédé objet de l'invention de fabrication de mets salés ou sucrés à base de pâte et d'ingrédients consiste à :
- traiter en premier les dosettes à pâte de la figure 1 pour former la pâte par ouverture de la séparation hermétique 4 mettant l'eau et la farine en contact, à mélanger les éléments secs et humides et à brasser la pâte puis à la répartir sur des moyens de cuisson ;
- à traiter ensuite les dosettes d'ingrédients selon la figure 2 par ouverture et répartition de leur contenu sur la pâte préalablement étalée sur le moyen de cuisson.

La pâte peut être à ce stade du procédé déjà cuite ou précuite ou à cuire.

Selon le procédé objet de l'invention, la conformation de la dosette et/ou la répartition topographique des ingrédients dans la dosette en coopération avec les mouvements relatifs du ou des moyens de cuisson par rapport au sens de déversement des ingrédients permet d'obtenir une répartition calculée aléatoire ou géométrique des ingrédients sur la pâte.

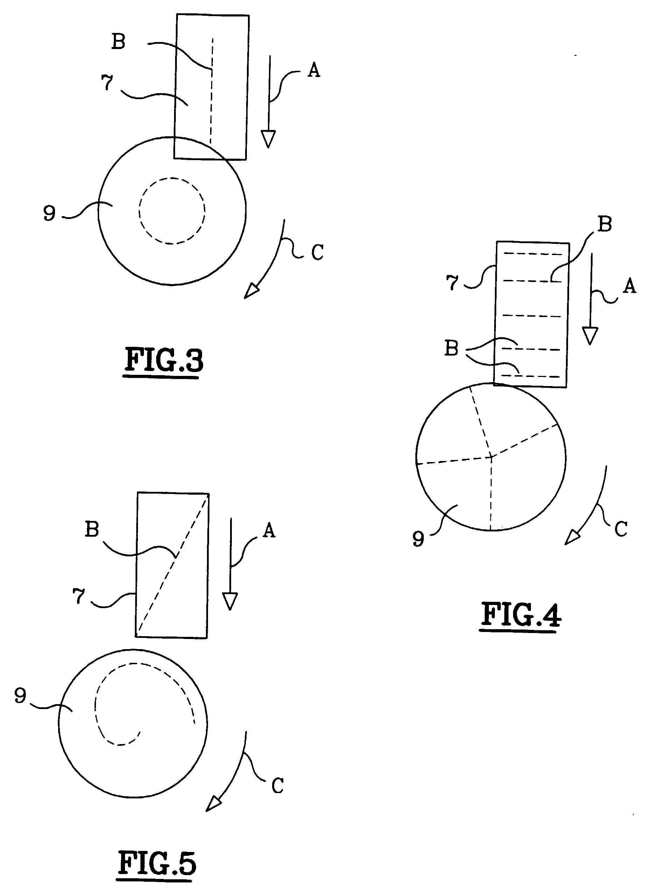

Les figures 3, 4 et 5 illustrent de manière schématique la mise en oeuvre du procédé.

Aux figures 3, 4, 5, la dosette d'ingrédients est repérée par 7. Elle est supposée ouverte.

Le sens de déversement est représenté par la flèche latérale A. La disposition topographique des ingrédients est schématisée par la ligne B en trait discontinu qui dans l'exemple de la figure 3 est droite et médiane à la dosette.

Le déversement s'effectue sur une sole chauffante ou chauffée 9 qui est pendant cette opération entrainée en rotation par tous moyens connus suivant le sens de la flèche C.

Selon la disposition topographique des ingrédients dans la dosette de la figure 3, les ingrédients en ligne B seront par déversement disposés sensiblement suivant un cercle sur la pâte portée par la sole 9.

Suivant la disposition topographique des ingrédients dans la dosette de la figure 4, les ingrédients disposés en ligne B parallèles entre elles et transversale à la dosette et au sens de déversement indiqué par A, seront répartis sur la pâte portée par la sole 9 sensiblement en étoile.

Suivant la disposition topographique des ingrédients dans la dosette de la figure 5, les ingrédients disposés suivant une ligne B en biais par rapport au sens de déversement représenté par A seront disposés sur la pâte portée par la sole 9 sensiblement suivant une spirale.

Le déversement des ingrédients peut se faire de toute manière et par tout moyen connu par exemple au moyen d'une racle non représentée mobile sur la dosette ou comme mentionné dans la précédente demande des mêmes demandeurs par enroulement d'une des feuilles 8 formant la dosette sur une clef transversale.

Dans ce cas, les ingrédients disposés en vrac et sans ordre topographique particulier tels que sauce, garniture, légumes, seront disposés de manière aléatoire.

La répartition aléatoire des divers ingrédients notamment ceux en petits morceaux donnera une répartition aléatoire par opposition du déversement linéaire et de la rotation de la sole.

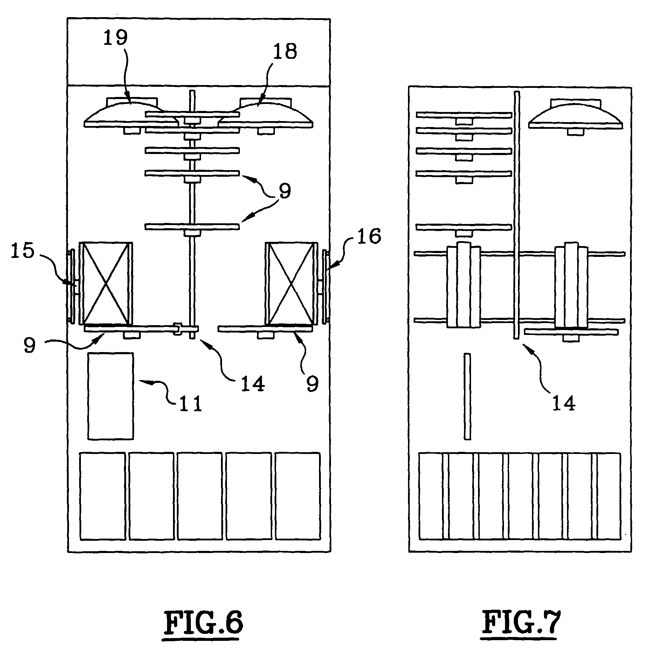

Aux figures 6 et 7, sont représentées des vues en coupe et élévation de face (figure 6) et de profil (figure 7) de la machine selon l'invention.

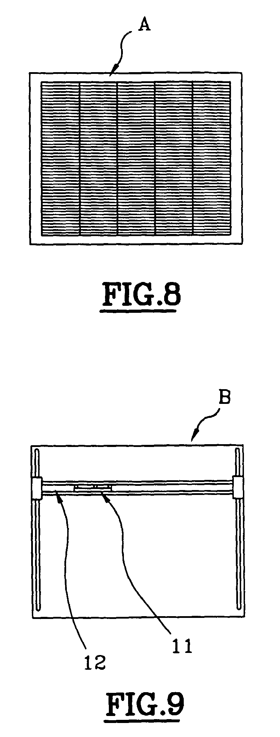

Les figures 8 à 13 représentent des vues en coupe horizontale de la machine selon les figures 7 et 8 sur lesquelles ces coupes sont repérées par les traits de coupe en lignes discontinues A, B, C, D et E.

Aux figures 7 et 8, on voit un étage A inférieur de stockage de dosettes ici référencé génériquement par 10.

Ce sont indifféremment des dosettes à pâte (ou pâte et sauce) selon la figure 1 ou des dosettes à ingrédients selon la figure 2.

Ces dosettes peuvent être disposées de chant dans un conteneur.

Elles peuvent être dotées d'un moyen d'identification qui sera lu par des moyens adaptés, par exemple code à barres et détecteur de code à barres, les informations détectées étant transmises à des moyens informatisés permettant de choisir le programme de traitement suivant le type de dosette détectée.

A l'étage A correspond la figure 8 qui est une vue en plan.

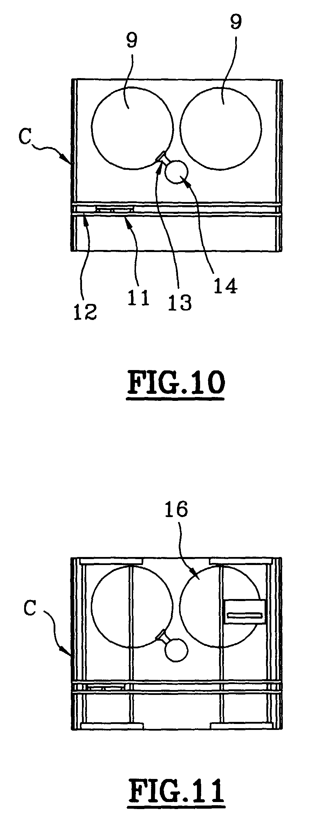

Un dispositif manipulateur de dosette (repère B et figures 9/10) prend une des dosettes.

Ce dispositif peut être comme représenté aux figures 9/10 une pince 11 mobile en X, Y portée par un portique 12 (la pince est mobile le long du portique suivant X et le portique est mobile suivant Y sur un bâti à rail de type connu).

A l'étage B est représenté schématiquement le manipulateur de dosette.

A l'étage C est représenté le préparateur de dosette ainsi qu'à l'étage C'.

Dans ces deux cas, sont représentées deux soles 9 chauffantes destinées à recevoir la pâte et les ingrédients ainsi qu'un bras manipulateur 13 avec à son extrémité une pince de préhension des soles.

Ce bras, il peut y en avoir plusieurs, est mobile de haut en bas sur un axe vertical 14 et est rotatif de gauche à droite.

Cette mobilité et cette rotation sont obtenues par tous moyens mécaniques connus.

A la figure 11 sont représentés schématiquement un préparateur de dosette à pâte ou préparateur 15 et un préparateur 16 de dosette à ingrédients, le préparateur de dosette à pâte 15 est rotatif sur un axe pour brasser la pâte et/ou agiter les ingrédients et faciliter le mélange.

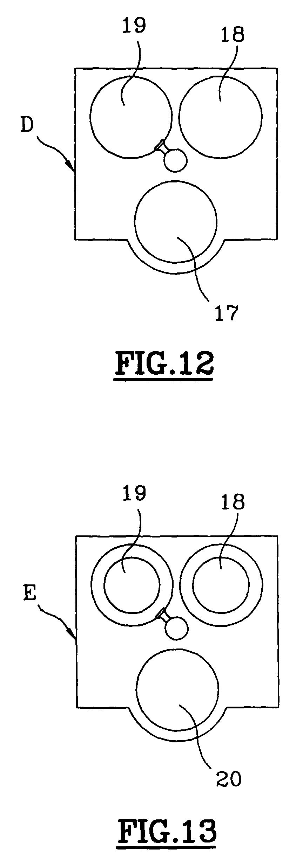

En figure 12 sont représentés une aire 17 de dépose manuelle, dans le cas d'intervention pour la dépose des ingrédients et vue en pointillé, l'implantation des fours de précuisson 18 et de cuisson 19 qui sont également représentés en figure 13 ainsi que l'aire 20 de sortie du met préparé.

La machine comprend une pluralité de soles 9 chauffantes suivant le réceptacle de la pâte, de la sauce et des ingrédients aux différentes étapes de fabrication du met en sorte de permettre une fabrication en continu.

Les soles sont constituées de platines de forme circulaire dotées de moyens permettant de les engrener avec un dispositif de mise en rotation de tout type connu dont elles peuvent être séparées pour être transférées à d'autres postes, tels que par exemple le ou les postes de cuisson et le ou les postes de préhension des mets réalisés.

A cet effet, elle peut également comprendre une pluralité de dispositifs manipulateurs et de dispositifs préparateurs.

Chacun des préparateurs 15 et 16 de dosettes sont dotés d'un certain nombre d'outils permettant d'intervenir sur la dosette.

Chacun des manipulateurs est constitué d'au moins une de préférence, de deux tourelles non représentées pour simplifier les dessins.

Les tourelles, lorsqu'il y en a deux, sont disposées l'une sous l'autre et sont mobiles en déplacement suivant l'axe longitudinal de la dosette ou inversement, la dosette peut être tractée en va et vient.

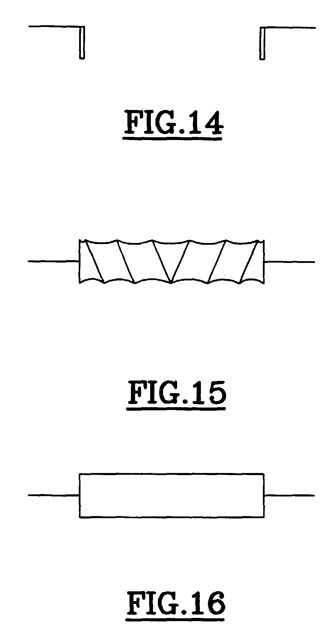

Chaque tourelle est rotative et permet de positionner par rapport à la dosette trois types d'outil qui sont représentés schématiquement aux figures 14, 15, 16 :
- un outil à crochet (fig. 14),
- un outil à malaxer (fig. 15),
- et un outil à laminer (fig. 16).

Ces outils permettent d'intervenir sur les opérations sur pâte, les opérations sur sauce et les opérations sur ingrédients.

L'outil à crochet permet la libération de la pince séparant enceinte à farine et enceinte à eau de la dosette à pâte et l'ouverture de l'enceinte après malaxage de la pâte ou l'ouverture de l'enceinte à sauce.

L'outil à malaxer est un rouleau à vis sans fin.

L'outil à laminer est un rouleau lisse.

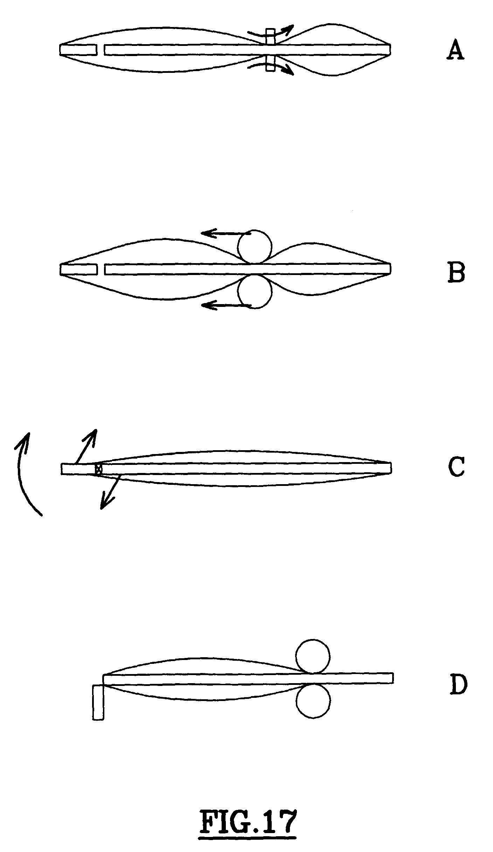

Les opérations de déclipsage (ouverture de la pince, ...), de malaxage, de désoperculation et de lamination et d'extraction, lamination avec évacuation des produits sont représentées en A, B, C et D de la figure 17.

Après malaxage de la pâte et déversement sur une des soles 9, celle-ci est transférée à un poste de cuisson constitué par un four 18 ou 19.

La machine comprend au moins un four et de préférence deux, un étant affecté à une précuisson de la pâte et un pouvant être affecté à la cuisson finale après déversement des ingrédients.

Dans le cas de précuisson de la pâte avant dépose, la sole avec la pâte précuite est transférée du premier four au poste de déversement des ingrédients puis au deuxième four.

Les fours peuvent être de tout type connu.

## Revendications

1. Procédé de fabrication de mets salés ou sucrés à base de pâte à partir de dosettes (7) pour la fabrication de pâte par mélange de la dose d'eau et de farine que contiennent les dites dosettes et de dosettes spécifiques aux ingrédients,
caractérisé en ce que :
- ladite pâte est déversée sur des moyens de cuisson constitués de soles planes chauffées (9) dans un four
- les dosettes à pâte sont traitées en premier pour former la pâte puis pour la répartir sur les moyens de cuisson, ce traitement s'effectuant par un dispositif manipulateur (11) qui prend chaque dosette et la transmet à un dispositif préparateur 15, propre aux dosettes à pâte ;
- les dosettes d'ingrédients ou condiments sont ensuite traitées pour être ouvertes et leur contenu réparti sur la pâte au moyen d'un des dispositifs manipulateur (11) et préparateur (16) propre aux dosettes à condiments et que la conformation de la dosette et/ou la répartition topographique des ingrédients dans la dosette en coopération avec les mouvements rotatifs des soles par rapport au sens de déversement permettant d'obtenir une répartition calculée aléatoire ou géométrique des ingrédients.

2. Machine à fabriquer des mets salés ou sucrés à base de pâte par mélange de la dose d'eau et de farine à partir de dosettes (7) contenant l'eau et la farine et de dosettes spécifiques aux ingrédients, la dite pâte étant déversée sur des moyens de cuisson constitués de sole (9) chauffée dans un four, la dite machine comprenante :
- une zone de stockage des dosettes à pâte et à ingrédients,
- des moyens de prélèvement (11) et de manipulation (15) pour les dosettes à pâte et des moyens de manipulation (16) pour les dosettes à ingrédients, permettant un transfert, avec leur préparation pour la pâte par mélange eau et farine, de la zone de stockage aux moyens de cuisson avec dans un premier temps cuisson de la pâte puis dans un deuxième temps déversement des ingrédients ou garniture et cuisson finale.

3. Machine selon la revendication 2 caractérisée en ce qu'elle comprend un dispositif manipulateur (11) qui prend chaque dosette et la transmet à un dispositif préparateur (15, 16) propre à chaque type de dosette.

4. Machine selon les revendications 2 et 3 caractérisée en ce que le préparateur (15) de dosette à pâte réalise le mélange de la pâte, ouvre la dosette, répartit la pâte sur la sole (9), ouvre l'enceinte sauce de la dosette si besoin et vide la sauce sur la pâte.

5. Machine selon les revendications 2 et 3 caractérisée en ce que le préparateur (16) de dosette à ingrédient ouvre celle-ci, la vide et en répartit les ingrédients sur la pâte avec ou sans sauce selon une topologie aléatoire ou géométrique.

6. Machine selon la revendication 2 caractérisée en ce qu'une pluralité de soles (9) mobiles sont intercalées entre le poste ou les postes de déversement de la pâte et/ou des ingrédients et le ou les postes de cuisson.

7. Machine selon les revendications 2 et 6 caractérisée en ce qu'elle comprend un ou plusieurs bras manipulateurs (13) mobiles de haut en bas et en rotation sur un axe vertical (14) dotés chacun d'une pince de préhension des soles.

8. Machine selon les revendications 2 et 6 caractérisée en ce que chaque sole est dotée d'un moyen d'engrènement avec un dispositif de mise en rotation.

9. Machine selon la revendication 2 caractérisée en ce que le dispositif préparateur à dosette comprend réparti sur une même tourelle rotative et mobile un outil à crochet d'ouverture de la dosette et de sa séparation, un outil à malaxer, un outil à laminer.

10. Machine selon la revendication 9 caractérisée en ce qu'elle comprend deux tourelles l'une sous l'autre entre lesquelles est traitée la dosette à pâte.

11. Machine selon la revendication 1 caractérisée en ce que les dosettes sont dotées d'un moyen d'identification.

## Claims

1. Method for making savoury or sweet dough-based food using dose dispensers (7) for making dough by mixing the measured quantity of water and flour contained in said dose dispensers, and dose dispensers specific to the ingredients, characterised in that
- said dough is poured onto baking means constituted by heated flat hearths (9) in an oven;
- the dough dose dispensers are treated first in order to shape the dough then to distribute it over the baking means, this treatment taking place through a handling device (11), which takes each dose dispenser and transmits it to a preparation device 15, specific to the dough dose dispensers;
- the ingredient or condiment dose dispensers are then treated so as to be opened and their content distributed over the dough by means of one of the handling devices (11) and preparation devices (16) specific to the condiment dose dispensers and that the shape of the dose dispenser and/or the topographical distribution of the ingredients in the dose dispenser in cooperation with the rotary movements of the hearths relative to the pouring direction making it possible to obtain a distribution, calculated at random or geometrically, of the ingredients.

2. Machine for making savoury or sweet dough-based food by mixing the measured quantity of water and flour using dose dispensers (7) containing the water and flour and dose dispensers specific to the ingredients, said dough being poured over the baking means constituted by hearth (9) heated in an oven, said machine comprising:
- an area for storing the dose dispensers for dough and ingredients,
- means for fetching (11) and handling (15) the dough dose dispensers and means for handling (16) the ingredient dose dispensers, permitting transfer, together with their preparation for the dough by mixing water and flour, from the storage area to the baking means with, in a first time, baking of the dough then, in a second time, pouring of the ingredients or garnish and final baking.

3. Machine according to Claim 2, characterised in that it comprises a handling device (11) that takes each dose dispenser and transmits it to a preparation device (15, 16) specific to each type of dose dispenser.

4. Machine according to Claims 2 and 3, characterised in that the preparer (15) of the dough dose dispenser performs the mixing of the dough, opens the dose dispenser, distributes the dough on the hearth (9), opens the sauce enclosure of the dose dispenser if necessary and empties the sauce over the dough.

5. Machine according to Claims 2 and 3 characterised in that the preparer (16) of the ingredient dose dispenser opens said dose dispenser, empties it and distributes the ingredients over the dough with or without sauce, according to a random or geometric topology.

6. Machine according to Claim 2 characterised in that a plurality of moveable hearths (9) are inserted between the station or stations for pouring the dough and/or the ingredients and the baking station or stations.

7. Machine according to Claims 2 and 6 characterised in that it comprises one or more handling arms (13) moveable up and down and in rotation about a vertical axis (14), each provided with tongs for grasping the hearths.

8. Machine according to Claims 2 and 6 characterised in that each hearth is provided with a means for engaging with a rotation device.

9. Machine according to Claim 2 characterised in that the dose dispenser preparation device comprises, distributed over the same rotary mobile turret, a hook-type tool for opening the dose dispenser and for its separation, a kneading tool, a rolling tool.

10. Machine according to Claim 9 characterised in that it comprises two turrets, one below the other, between which the dough dose dispenser is treated.

11. Machine according to Claim 1 characterised in that the dose dispensers are provided with an identification means.

## Patentansprüche

1. Verfahren zur Herstellung von salzigen oder süßen Speisen auf Teigbasis ausgebend von Dosispackungen (Dosetten) (7) für die Teigherstellung durch Mischen der Wasserdosis und der Mehldosis, welche diese Dosetten enthalten, und von besonderen Dosetten für die Zutaten, **dadurch gekennzeichnet, daß**
- der Teig auf Backvorrichtungen abgegeben wird die aus ebenen, in einem Ofen erhitzten Böden (9) bestehen, wobei
- zunächst die Teigdosetten zur Herstellung des Teiges behandelt werden, der dann auf die Backvorrichtungen verteilt wird, wobei diese Behandlung durch einen Manipulator (11) erfolgt, dur jede Dosette ergreift und sie zu einer für die Teigdosetten entsprechend ausgebildeten Zubereitungsvorrichtung (15) überführt;
- und anschließend die Dosetten der Zutaten oder Gewürze mittels eines der für diese Dosetten ausgebildeten Manipulatoren (11) und Zubereitungsvorrichtungen (16) behandelt werden, um sie zu öffnen und ihren Inhalt auf dem Teig zu verteilen, wobei die Ausbildung der Dosette und/oder die örtliche Verteilung der Zutaten in der Dosette es im Zusammenwirken mit den Drehbewegungen der Böden bezüglich der Abgaberichtung ermöglichen, eine berechnete zufällige oder geometrische Verteilung der Zutaten zu erhalten.

2. Maschine zur Herstellung von salzigen oder süßen Speisen auf Teigbasis durch Mischen der Wasserdosis und der Mehldosis ausgehend von Wasser und Mehl enthaltenden Dosetten (7) und besonderen Dosetten für Zutaten, wobei der Teig auf eine Backvorrichtung abgegeben wird, die aus einem in einem Ofen erhitzten Boden (9) besteht, wobei die Maschine aufweist:
- eine Speicherzone für die Teigdosetten und Zutatendosetten;
- eine Entnahmevorrichtung (11) und einen Manipulator (15) für die Teigdosetten und einen Manipulator (16) für die Zutatendosetten, welche einen Transfer mit Zubereitung des Teigs durch Mischen von Wasser und Mehl von der Speicherzone zu der Backvorrichtung ermöglichen mit Backen des Teiges während einer ersten Zeit und dann in einer zweiten Zeit Aufgabe der Zutaten oder Garnitur und Fertigbacken.

3. Maschine nach Anspruch 2, **dadurch gekennzeichnet, daß** sie einen Manipulator (11) aufweist der jede Dosette ergreift und sie zu einer dem jeweiligen Typ der Dosette entsprechenden Zubereitungsvorrichtung (15, 16) überführt.

4. Maschine nach den Ansprüchen 2 und 3, **dadurch gekennzeichnet, daß** die Zubereitungsvorrichtung (15) für die Teigdosette das Mischen des Teiges, Öffnen der Dosette, Verteilung des Teiges auf dem Boden (9), Öffnen der Soßenkammer der Dosette, falls erforderlich, und Entleeren der Soße auf den Teig bewirkt.

5. Maschine nach den Ansprüchen 2 und 3, **dadurch gekennzeichnet, daß** die Zubereitungsvorrichtung (16) für die Zutatendosette diese öffnet, leert und deren Zutaten auf den Teig mit oder ohne Soße gemäß einer zufälligen oder geometrischen örtlichen Verteilung verteilt.

6. Maschine nach Anspruch 2, **dadurch gekennzeichnet, daß** eine Mehrzahl von beweglichen Böden (9) zwischen der Station oder den Stationen der Abgabe des Teiges und/oder der Zutaten und der Backstation oder den Backstationen zwischengeschaltet sind.

7. Maschine nach den Ansprüchen 2 und 6, **dadurch gekennzeichnet, daß** sie einen oder mehrere Manipulatorarme (13) aufweist, die Von oben nach unten und um eine vertikale Achse (14) drehbar beweglich sind und jeder mit einer Zange zum Ergreifen von Böden ausgerüstet sind.

8. Maschine nach den Ansprüchen 2 und 6, **dadurch gekennzeichnet, daß** jeder Boden mit einer Einrichtung versehen ist, die in Eingriff mit einer Drehvorrichtung kommt.

9. Maschine nach Anspruch 2, **dadurch gekennzeichnet, daß** die Dosettenzubereitungsvorrichtung an ein und dem gleichen drehbaren und beweglichen Revolverkopf verteilt ein Hakenwerkzeug zum Öffnen der Dosette und zu ihrer Trennung ein Mischwerkzeug, ein Quetschwerkzeug trägt.

10. Maschine nach Anspruch 9, **dadurch gekennzeichnet, daß** sie zwei untereinander angeordnete Revolverköpfe aufweist, zwischen denen die Teigdosette behandelt wird.

11. Maschine nach einem der Ansprüche 2 bis 10 zur Behandlung von Dosetten nach Anspruch 1, **dadurch gekennzeichnet, daß** die Dosetten mit eine Identifizierungsmittel versehen sind.
